# EUROPÄISCHE PATENTSCHRIFT

(11) **EP 3 208 507 B1**
(45) Veröffentlichungstag und Bekanntmachung des Hinweises auf die Patenterteilung: **13.05.2020**
(21) Anmeldenummer: 17156174.9
(22) Anmeldetag: 15.02.2017
(51) Int. Cl.: F16L 5/04, H02G 3/04, H02G 3/22

(54) **KABELDURCHFÜHRUNGSEINRICHTUNG MIT BRANDSCHUTZ**
FIRE STOPPING PASS THROUGH DEVICE
PASSAGE DE CABLE COUPE-FEU

(30) Priorität: 17.02.2016 CH 2082016
(43) Veröffentlichungstag der Anmeldung: 23.08.2017
(73) Patentinhaber: odasys AG, 8105 Regensdorf (CH)
(72) Erfinder: ILLI, Walter, 8107 Buchs (CH)
(74) Vertreter: Frei Patent Attorneys

(56) Entgegenhaltungen:
- EP-A2- 2 154 762
- EP-A2- 2 273 637
- GB-A- 2 216 220
- US-A1- 2015 121 783

## Beschreibung

Die Erfindung liegt auf dem Gebiet des Brandschutzes für Kabeldurchführungen. Die Erfindung betrifft eine Einrichtung mit Brandschutz nach dem Oberbegriff des Anspruchs 1. Die Erfindung betrifft ferner eine Brandschutzhülse nach dem Oberbegriff des Anspruchs 7 für eine solche Einrichtung sowie ein Verfahren zum Erstellen einer solchen Einrichtung.

Die Einrichtung, auch Leitungsdurchführungseinrichtung genannt, dient insbesondere zur Durchführung von mindestens einer in einem Installationsrohr geführten Leitung durch eine Wand oder Decke in einem Gebäude.

Bei Neubauten aber auch beim Umbau bzw. bei der Sanierung von Gebäuden, beispielsweise von Wohn- und Geschäftshäusern, ist auf Grund gesetzlicher Brandschutzbestimmungen auf einen ausreichenden Brandschutz zu achten.

Ein Brandherd entsteht innerhalb eines Gebäudes im Normalfall nur in einem örtlich begrenzten Bereich, beispielsweise in einem Raum. Das Feuer sowie die dabei entstehenden Verbrennungsgase und Rauch breiten sich allerdings ausgehend vom Brandherd innerhalb eines Gebäudes aus. Brandschutznormen zielen nun darauf ab, die Ausbreitung des Feuers sowie der Verbrennungsgase und des Rauches innerhalb des Gebäudes zu verhindern oder zumindest zeitlich zu verzögern.

Die Verhinderung bzw. zeitliche Verzögerung der Brandausbreitung sowie der Ausbreitung der Verbrennungsgase und des Rauches innerhalb des Gebäudes hat einerseits zum Ziel, den Sachschaden am Gebäude möglichst gering zu halten und andererseits Schaden an Leib und Leben von Personen zu verhindern.

So verschafft zum Beispiel eine zeitliche Verzögerung der Ausbreitung eines Brandes innerhalb eines Gebäudes dank entsprechender Brandschutzmassennahmen den Hilfskräften bei der Evakuierung der Bewohner wertvolle Zeit.

Zudem verschafft eine Verzögerung der Brandausbreitung insbesondere in den ersten Minuten nach Brandausbruch der Feuerwehr wertvolle Zeit bei der Brandbekämpfung.

So werden beispielsweise auch bei der Durchführung von Installationsleitungen durch Wände und Decken entsprechende Brandschutzmassnahmen vorgeschrieben.

Installationsleitungen, wie Strom- oder Datenleitungen, werden häufig in Installationsrohren geführt, welche wiederum durch Wände und Decken geführt sind. Der Rohrhohlraum ermöglicht nun den Durchtritt von Flammen durch Wände und Decken. Dies insbesondere dann, wenn die in den Installationsrohren geführten Installationsleitungen selbst brennbare Materialien umfassen.

Diese Problematik ist bei Deckendurchführungen noch verschärft, da dort die vertikale Führung der Installationsrohre für einen zusätzlichen Kamineffekt sorgen kann.

Aber auch einfache Kabeldurchführungen durch Wände und Decken müssen von entsprechenden Brandschutzmassnahmen begleitet sein.

Deshalb schreiben die Brandschutzvorschriften vor, dass Flammen und gegebenenfalls auch Rauch und Verbrennungsgase innerhalb einer vorgegebenen Feuerwiderstandsdauer Kabel- bzw. Rohrdurchführungen nicht passieren dürfen.

Hierzu werden im Bereich von Leitungsdurchführungen durch Wände und Decken so genannte Brandschutzabschottungen eingebaut, welche verhindern, dass sich im Brandfall Flammen und insbesondere Rauch und Verbrennungsgase von Raum zu Raum oder über Geschosse ausbreiten können.

Eine Brandschutzabschottung kann als so genanntes Weichschott oder Hartschott ausgeführt werden. Ein Weichschott umfasst z. B. Komponenten wie Mineralfaserplatte, Brandschutz-Beschichtung und Brandschutzspachtel. Der Hauptbestandteil eines Hartschotts ist insbesondere ein Brandschutzmörtel.

Solche Brandschutzabschottungen sind bei einfachen Kabeldurchführungen in der Regel genügend, da die Brandschutzabschottung ihn diesem Fall eine ausreichende Feuerwiderstandsdauer gewährleistet.

Bei der Durchführung von Installationsrohren mit einem Rohrhohlraum, insbesondere von Bündelrohrsystemen, durch Wände und Decken sind allerdings zusätzliche Brandschutzvorkehrungen notwendig. Andernfalls können nämlich im Brandfall Flammen, Rauch oder Verbrennungsgase die Wand oder Decke durch den Rohrhohlraum ungehindert passieren.

Es ist nun bekannt, so genannte intumeszente Materialien, auch intumeszierende Materialien genannt, bei der Leitungsdurchführung durch Wände und Decken als zusätzliche Brandschutzvorkehrung einzusetzen. Intumeszente Materialien zeichnen sich dadurch aus, dass diese unter Hitzeeinwirkung an Volumen zunehmen und so im Brandfall zuvor offene Durchlässe verschliessen können. Intumeszente Materialien sollen dabei im Brandfall insbesondere Rohrhohlräume von Installationsrohren im Bereich der Durchführung verschliessen.

Die Volumenzunahme geschieht durch das Schwellen, Aufschäumen bzw. Aufblähen des intumeszenten Material unter Hitze. Bei diesem Vorgang wird das intumeszente Material in der Regel in einen Hartschaum verwandelt.

So ist es beispielsweise bekannt, den Leitungsdurchlass in einer Wand oder Decke, durch welche die Installationsrohre geführt werden, mittels Formkörpern, welche bei Hitze aufquellen, zu verschliessen. Im Brandfall verschliessen die aufquellenden Formkörper den Leitungsquerschnitt der durch die Wand bzw. Decke geführten Installationsrohre und verhindern so ein Durchtritt der Flammen auf die andere Seite.

Ein Nachteil vieler bekannter Lösungen liegt nun darin, dass die Ausführung von Brandschutzabschottungen mit zusätzlichen Brandschutzvorkehrungen, wie sie bei Rohrdurchführungen vorgeschrieben sind, aufwendig ist und nur durch entsprechend geschultes Fachpersonal durchgeführt werden kann.

Im Weiteren ist bei herkömmlichen Lösungen auch der Koordinationsaufwand zwischen den einzelnen Bauhandwerkern sowie dem Brandschutzverantwortlichen hoch. So muss insbesondere sichergestellt werden, dass bei Leitungsdurchführungen unterschiedlicher Ausführung entsprechend vorschriftsgemässe Brandschutzabschottungen ausgeführt werden.

Dabei muss das für die Erstellung der Brandschutzabschottung zuständige Handwerkspersonal rechtzeitig über die Ausgestaltung der auszuführenden Brandschutzabschottung instruiert werden.

Ist nun das zuständige Handwerkspersonal vorab nicht ausreichend über die Art der Leitungsdurchführung informiert, so besteht die Gefahr, dass die Brandschutzabschottung mit falschen oder ungenügenden Brandschutzmassnahmen ausgeführt wird.

Die Veröffentlichungsschrift US 2015/121783 A1 beschreibt einen mehrteiligen, rohrförmigen Brandschutzdurchgang durch eine Betondecke zur Durchführung von Leitungen. Der Durchgang umfasst einen rohrförmigen Zylinder aus einem intumeszenten Material, welches in einer zweiteiligen Halteschale gehalten ist. Der Durchgang ist mittels einer Verschlusskappe verschlossen.

Die Veröffentlichungsschrift EP 2 273 637 A2 beschreibt eine Brandschutzdurchführung durch eine Wand zur Durchführung eines Kabels. Die Brandschutzdurchführung umfasst eine Hülse aus intumeszierenden Material oder mit einer äusseren oder inneren intumeszierenden Beschichtung. Die Aussenabmessung ist der Durchgangslochung angepasst, so dass die Hülse in die Durchgangslochung einsteckbar ist.

Es ist deshalb Aufgabe vorliegender Erfindung, eine Einrichtung mit Brandschutz zur Durchführung von mindestens einer in einem Installationsrohr geführten Leitung durch eine Wand oder Decke vorzuschlagen, welche einfach und kostengünstig in der Ausführung sowie auch als Nachrüstlösung geeignet ist.

Ferner soll die Einrichtung mit Brandschutz so ausgestaltet sein, dass die bei Rohrdurchführungen notwendigen, zusätzlichen Brandschutzvorkehrungen beim Verlegen der Leitungen durch den Leitungsinstallateur selbst ausgeführt werden können, so dass das für die Erstellung der Brandschutzabschottung zuständige Handwerkspersonal selbst keine zusätzlichen Brandschutzvorkehrungen ergreifen muss.

Es wurde nun auf der Suche nach einer Lösung für die oben genannte Aufgabe auch ein Verfahren getestet, gemäss welchem eine fliessfähige intumeszente Masse im Bereich des Wand- bzw. Deckendurchganges durch eine Öffnung im Mantel des Installationsrohrs in einen Rohrabschnitt des Installationsrohrs injiziert wird. Die fliessfähige Masse härtet dabei im Inneren des Installationsrohres aus. Im Brandfall quillt die intumeszente Masse im Installationsrohr durch Hitzeeinwirkung auf und verschliesst den Rohrinnenraum im besagten Rohrabschnitt. Eine Ausbreitung der Flammen durch den Rohrinnenraum wird dadurch verhindert.

Allerdings weist dieses Verfahren den Nachteil auf, dass die fliessfähige intumeszente Masse sich im Anschluss an das Injizieren in den Rohrinnenraum während der Aushärtung ausdehnt und den Rohrquerschnitt bereits verschliesst.

Dies kann dazu führen, dass durch den Druck der sich ausdehnenden intumeszenten Masse im Inneren des Installationsrohres Leitungsröhrchen, welche beispielsweise Leitungskabel aufnehmen, gequetscht werden. Dies kann insbesondere dann der Fall sein, wenn die intumeszente Masse in den äusseren Randbereichen schneller aushärtet als zwischen den Randbereichen, so dass sich die intumeszente Masse zwischen den Randbereichen nicht mehr in Längsrichtung des Installationsrohres ausdehnen kann sondern nur noch quer dazu.

Ein Quetschen der Leitungsröhrchen kann allerdings das Einführen, insbesondere Einblasen, der Leitungskabel in die Leitungsröhrchen im Anschluss an die Verlegung des Installationsrohres behindern oder sogar verunmöglichen.

Das oben getestete Verfahren weist noch weitere Nachteile aus. So wird eine spezielle Injektionseinrichtung benötigt, wie sie beispielsweise auch aus dem Bereich der Fugendichtungen bekannt ist. Ferner umfasst die Injektionseinrichtung auch einen Einspritz-Adapter, über welchen die intumeszente Masse aus einem Behälter in das Installationsrohr injiziert werden kann. All die mit der intumeszenten Masse während des Injektionsvorganges in Berührung kommenden Teile der Injektionsvorrichtung neigen jedoch zur Verschmutzung und erfordern eine regelmässige Reinigung.

Die an der Luft schnell aushärtende intumeszente Masse kann zudem Teile der Injektionseinrichtung, insbesondere den Einspritz-Adapter, verstopfen und diese unbrauchbar machen. Ferner ist auch das Fachpersonal, welches das Injektionsverfahren ausübt sowie generell die Umgebung vor Verschmutzung zu schützen.

Die vorliegende Aufgabe wird nun durch die Merkmale der unabhängigen Ansprüche 1, 7 und 13 gelöst. Die abhängigen Ansprüche, die Beschreibung und die Figuren beinhalten besondere Ausführungsformen und Weiterbildungen der Erfindung.

Die erfindungsgemässe Einrichtung zeichnet sich nun durch eine im Bereich des Durchlasses in der Wand oder der Decke angeordnete Brandschutzhülse aus, welche mit einem ersten Hülsenendabschnitt mit dem Rohrendabschnitt eines zuführenden Installationsrohrs und mit einem zweiten Hülsenendabschnitt mit dem Rohrendabschnitt eines wegführenden Installationsrohrs verbunden ist. Dabei ist die mindestens eine Leitung vom zuführenden Installationsrohr durch die Brandschutzhülse in das wegführende Installationsrohr geführt. Im Inneren der Brandschutzhülse ist ein intumeszentes Material angeordnet.

Mindestens ein Längsabschnitt, insbesondere ein zwischen den Stirnendseiten liegender Mittelängsabschnitt der Brandschutzhülse ist im Durchlass angeordnet. Gemäss einer Weiterbildung ist die gesamte Brandschutzhülse im Durchlass der Wand bzw. Decke angeordnet.

Der Hülsenendabschnitt und der Rohrendabschnitt bilden jeweils einen Verbindungsabschnitt aus. Der Innendurchmesser des Hülsenendabschnittes entspricht dabei insbesondere dem Aussendurchmesser des Leitungsrohres im Rohrendabschnitt. Der Innendurchmesser kann auch geringfügig kleiner sein, so dass der Rohrendabschnitt im Hülsenendabschnitt geklemmt wird.

Bei Rillenstrukturen, wie nachfolgend noch erörtert, beziehen sich die Angaben zum Durchmesser auf die sich jeweils ergänzenden Erhöhungen und Vertiefungen der Rillungen am Rohrendabschnitt und Hülsenendabschnitt.

Die Brandschutzhülse ist nun eine Art Rohrzwischenverlängerung. Sie dient insbesondere dem Einbringen eines intumeszenten Materials in das Innere der Leitungsdurchführung.

Die Brandschutzhülse besteht hierzu insbesondere ebenfalls aus einem für den Brandschutz geeigneten Werkstoff, insbesondere Kunststoff, oder enthält einen solchen. Dieser Werkstoff ist insbesondere schwer entflammbar.

Die Brandschutzhülse ist insbesondere bei Raumtemperatur formstabil und bildet so eine schützende Ummantelung für die in dieser geführten Leitungen.

Die Brandschutzhülse weist insbesondere den Vorteil auf, dass das intumeszente Material bei der Erstellung der Einrichtung, insbesondere bei der Montage der Brandschutzhülse, als vorgefertigter Festkörper in die Brandschutzhülse, insbesondere in die offene Brandschutzhülse, einbringbar ist. So kann der intumeszente Festkörper bei der Montage der Brandschutzhülse in diese eingelegt werden.

Das heisst, der intumeszente Festkörper wird bei der Montage der Brandschutzhülse als separater Körper in die Brandschutzhülse eingelegt. Eine Befestigung des intumeszenten Festkörpers in der Brandschutzhülse ist nicht unbedingt notwendig, kann allerdings auch vorgenommen werden. Der intumeszente Festkörper kann insbesondere elastisch sein.

Der Begriff "Festkörper" bezieht sich auf einen Zustand bei Raumtemperatur.

Alternativ kann das intumeszente Material bei der Erstellung der Einrichtung, insbesondere bei der Montage der Brandschutzhülse, bereits in der Brandschutzhülse angeordnet bzw. angebracht sein. Auch in diesem Fall liegt das intumeszente Material insbesondere als Festkörper vor.

So kann die Brandschutzhülse beispielsweise mit dem in der Brandschutzhülse angeordneten bzw. angebrachten intumeszenten Material als vorgefertigte Montageeinheit ausgebildet sein.

Das intumeszente Material kann z. B. über eine Stoffschlussverbindung im Inneren der Brandschutzhülse angebracht bzw. befestigt sein. So kann das intumeszente Material beispielsweise in die Brandschutzhülse geklebt sein. Ferner ist es auch möglich, dass das intumeszente Material als fliessfähige Masse im Inneren der Brandschutzhülse aufgetragen wird, welche unter Aushärtung mit der Brandschutzhülse z. B. eine Stoffschlussverbindung eingeht.

Es ist ferner auch möglich, dass das intumeszente Material über andere Befestigungsarten, wie Form- oder Kraftschlussverbindung im Inneren der Brandschutzhülse angebracht bzw. befestigt ist.

Das intumeszente Material kann als schaumstoffartiger Körper mit intumeszenten Eigenschaften vorliegen.

Das intumeszente Material kann beispielsweise ein handelsübliches Dehnfugenband sein, wie sie z. B. für Dehnfugen zwischen Betonbauteilen eingesetzt werden. Solche Dehnfugenbänder haben unter anderem auch die Aufgabe, die Dehnfugen im Brandfall gegen die Ausbreitung der Flammen abzudichten. Entsprechend weisen solche Dehnfugenbänder intumeszente Eigenschaften auf.

Ein solches Dehnfugenband kann z. B. einen flachen oder rundlichen Querschnitt aufweisen.

So kann der intumeszente Festkörper ein Dehnfugenband aus einem Polyurethanschaum sein, welcher mit Brandschutzadditiven versetzt ist.

Die Brandschutzhülse weist jeweils eine erste und zweite Stirnendseite auf, an welchen jeweils eine Hülsenöffnung ausgebildet wird. D.h. die Brandschutzhülse ist an den jeweiligen Stirnendseiten offen.

Ferner bildet die Brandschutzhülse, wie erwähnt, jeweils einen ersten und zweiten Hülsenendabschnitt aus, welcher in der Stirnendseite endet.

Die Brandschutzhülse kann aus Kunststoff sein oder diesen enthalten. Der Kunststoff ist insbesondere flammbeständig. Die Brandschutzhülse kann auch aus Metall sein.

Die Brandschutzhülse kann beispielsweise mittels eines generativen Fertigungsverfahrens, wie 3D-Druckverfahrens, hergestellt sein. Die Brandschutzhülse kann auch mittels Spritzgiessen hergestellt sein.

Das Installationsrohr ist ein Wellrohr. Wellrohre zeichnen sich durch eine Rillung an ihrem Aussenumfang aus. Die Rillung eines Wellrohres ergibt sich aus in Rohrlängsrichtung abwechselnd, ringförmig umlaufende Erhöhungen und Vertiefungen am Aussenumfang des Rohres.

Die Vertiefungen zwischen zwei Erhöhungen liegen insbesondere als ringförmig umlaufende Rillen vor. Die Erhöhungen zwischen zwei Vertiefungen liegen insbesondere als ringförmig umlaufende Rippen vor. Die einander abwechselnden Erhöhungen und Vertiefungen können wellenförmig oder stufenförmig ausgebildet sein.

Das Wellrohr weist dank den Querschnittsverringerungen in den Vertiefungen eine gute Biegbarkeit aus, welche bei Installationen wichtig ist.

Das Wellrohr kann aus Metall oder Kunststoff sein. Im letzteren Fall wird auch von Wellschlauch gesprochen, wobei auch der Querschnitt eines Wellschlauchs formhaltig ist. Der Einfachheit halber sollen unter den Begriff Wellrohr auch Wellschläuche aus Kunststoff fallen.

Die Brandschutzhülse kann nun in mindestens einem der beiden Hülsenendabschnitte an ihrem Innenumfang eine Rillung aufweisen. Die Rillung kann vollumfänglich oder teilumfänglich sein. Die Rillung verläuft quer zur Hülsenlängsrichtung.

Die Rillung ist so ausgebildet, dass der besagte Hülsenendabschnitt mit dem Rohrendabschnitt eines Wellrohres eine axial gesicherte Verbindung ausbildet. Die Rillung am Hülsenendabschnitt greift dabei insbesondere kämmend in die Rillung am Rohrendabschnitt des Wellrohrs ein. Axial gesichert bedeutet, dass das Wellrohr in Hülsenlängsrichtung nicht verschiebbar ist. Der Rohrendabschnitt kann dabei vom Hülsenendabschnitt geklemmt werden.

Die Rillung ergibt sich aus in Hülsenlängsrichtung sich abwechselnden Erhöhungen und Vertiefungen am Innenumfang der Brandschutzhülse. Entsprechend ist die Rillung zum Hülseninneren gerichtet.

Die Vertiefungen zwischen zwei Erhöhungen liegen insbesondere als Rillen vor. Die Erhöhungen zwischen zwei Vertiefungen liegen insbesondere als Rippen vor. Die einander abwechselnden Erhöhungen und Vertiefungen können wellenförmig oder stufenförmig ausgebildet sein. Die Vertiefungen und Erhöhungen können jeweils ringförmig umlaufend ausgebildet sein.

Die Rillung am Innenumfang des Hülsenendabschnittes ist bezüglich der Querschnittsgeometrie der Erhöhungen und Vertiefungen insbesondere gegengleich zur Rillung am Aussenumfang des Wellrohrs ausgebildet.

Es kann nun sowohl der erste als auch der zweite Hülsenendabschnitt eine Rillung der oben beschriebenen Art enthalten. Entsprechend bildet der Rohrendabschnitt des zuführenden Wellrohres mit dem ersten Hülsenendabschnitt und der Rohrendabschnitt des wegführenden Wellrohres mit dem zweiten Hülsenendabschnitt jeweils eine axial gesicherte Verbindung der oben beschriebenen Art aus.

Die Brandschutzhülse übergreift unter Ausbildung eines Verbindungsabschnittes insbesondere mit mindestens einem Hülsenendabschnitt den Rohrendabschnitt eines Installationsrohres.

Insbesondere übergreift die Brandschutzhülse jeweils unter Ausbildung eines Verbindungsabschnittes mit dem ersten Hülsenendabschnitt den Rohrendabschnitt des zuführenden Installationsrohres und mit dem zweiten Hülsenendabschnitt den Rohrendabschnitt des wegführenden Installationsrohres.

Übergreifen bedeutet insbesondere auch die Ausbildung einer Überlappung zwischen Hülsenendabschnitt und Rohrendabschnitt im Verbindungsabschnitt.

Die Brandschutzhülse ist mehrteilig ausgebildet. Gemäss einer besonderen Weiterbildung ist die Brandschutzhülse zweiteilig ausgebildet.

So kann die Brandschutzhülse aus mehreren Hülsenteilen bestehen. Die Hülsenteile ergänzen sich dabei zur Brandschutzhülse. D.h. die Hülsenteile sind zur Brandschutzhülse zusammenfügbar.

Die einzelnen Hülsenteile können querschnittlich elastisch verformbar ausgebildet sein.

Die Brandschutzhülse enthält einen ersten Hülsenteil und einen zweiten Hülsenteil. Der erste und zweite Hülsenteil sind relativ zueinander beweglich ausgebildet.

Der erste Hülsenteil bildet eine zwischen den beiden Stirnendseiten durchgängige Längsöffnung aus. Durchgängig bedeutet, dass die Längsöffnung von Hülsenende zu Hülsenende reicht. Die Längsöffnung bildet einen Durchgang zum Hülseninneren aus.

Der zweite Hülsenteil bildet eine Abdeckung zur Abdeckung bzw. zum Verschliessen der Längsöffnung aus.

Die beiden Hülsenteile sind insbesondere derart relativ zueinander beweglich, dass die Längsöffnung im ersten Hülsenteil verschlossen und gegebenenfalls wieder geöffnet werden kann.

Die Längsöffnung dient nun dazu, die mindestens eine Leitung durch die Längsöffnung in den Hülseninnenraum der Brandschutzhülse zu legen. Dies, ohne dass ein Leitungsende der mindestens einen Leitung durch die Öffnung an einer Stirnendseite in den Hülseninnenraum eingeführt werden muss.

Die ersten und zweiten Hülsenteile können als separate Hülsenteile vorliegen. Diese sind entsprechend zur Brandschutzhülse zusammenfügbar und gegebenenfalls auch wieder vollständig voneinander trennbar.

Es ist allerdings auch möglich, dass die ersten und zweiten Hülsenteile über ein Scharnier, wie ein Filmscharnier, miteinander verbunden sind. Entsprechend sind die Hülsenteile über das Scharnier relativ zueinander verschwenkbar. Die Hülsenteile können über das genannte Scharnier unlösbar oder lösbar miteinander verbunden sein.

Die Hülsenteile können über eine Formschlussverbindung miteinander zur Brandschutzhülse verbunden werden, insbesondere wieder lösbar verbunden werden.

Gemäss einer Weiterbildung der Erfindung werden die Rohrendabschnitte des Installationsrohres bei der Montage der Brandschutzhülse in den Endabschnitten des ersten Hülsenteils sowohl axial, d.h. in Hülsenlängsrichtung, als auch quer zur Hülsenlängsrichtung gesichert gehalten. Das heisst, das Installationsrohr kann weder in axialer Richtung noch quer zur Axialrichtung aus dem ersten Hülsenteil herausgleiten.

Der Rohrendabschnitt des Wellrohres weist folglich bereits vor der Montage des zweiten Hülsenteils eine dauerhafte Verbindung mit dem ersten Hülsenteil auf.

Hierzu ist die Breite der Längsöffnung im ersten Hülsenteil im Bereich der Hülsenendabschnitte insbesondere kleiner als der grösste Aussendurchmesser des Installationsrohres am Rohrendabschnitt. Dadurch wird auch ein Herausgleiten des Rohrendabschnittes durch die Längsöffnung quer zur Hülsenlängsrichtung verhindert.

Gemäss einer besonderen Ausführungsform der Brandschutzhülse sind die Hülsenteile als Schalenteile ausgebildet. Das heisst, die Hülsenteile weisen jeweils insbesondere einen kreisbogenförmigen Querschnitt auf.

Besteht die Brandschutzhülse aus zwei sich zur Brandschutzhülse ergänzenden Hülsenteile, so weist nun der Kreisbogen des ersten Hülsenteils im Querschnitt insbesondere einen Mittelpunktswinkel von grösser 180°, insbesondere von grösser 240°, auf. Der Kreisbogen des zweiten Hülsenteils im Querschnitt weist entsprechend einen Mittelpunktswinkel von kleiner 180°, insbesondere von kleiner 120° auf.

Weist nun der Hülsenendabschnitt, wie oben beschrieben, eine Rillung am Innenumfang auf, so kann das Wellrohr nicht durch die Stirnendseite in den Hülsenendabschnitt eingeschoben werden, da die rippenförmigen Erhöhungen des Wellrohres an den rippenförmigen Erhöhungen der Brandschutzhülse anstehen.

Durch elastisches Auseinanderspreizen der Wandabschnitte des ersten Hülsenteils lässt sich allerdings die Breite der Längsöffnung vergrössern, so dass der Rohrendabschnitt stirnseitig oder durch die Längsöffnung quer zur Hülsenlängsrichtung in den Endabschnitt des ersten Hülsenteils eingeführt werden kann.

Der Rohrendabschnitt wird nun im Anschluss an die Einführung in den Endabschnitt des ersten Hülsenteils durch die sich wieder in die ursprüngliche Lage zurückbewegenden Hülsenwände gegen ein Herausgleiten quer zur Hülsenlängsrichtung aufgrund der Verringerung der Längsöffhungsbreite gesichert.

Die Rillung des Rohrendabschnittes greift nun kämmend in die Rillung des Endabschnittes des ersten Hülsenteils ein, so dass der Rohrendabschnitt auch gegen ein axiales Herausgleiten aus dem ersten Hülsenteil gesichert ist. Der Rohrendabschnitt kann dabei vom Endabschnitt geklemmt werden.

Auf diese Weise werden die Rohrendabschnitte des zuführenden und wegführenden Installationsrohres bereits vor der Montage des zweiten Hülsenteils jeweils von den Endabschnitten des ersten Hülsenteils gegen ein Herausgleiten gesichert gehalten.

Die oben beschriebene Befestigung der Rohrendabschnitte an den Endabschnitten des ersten Hülsenteils dient als Installationshilfe und erleichtert die nachfolgenden Montageschritte wie die Befestigung des zweiten Hülsenteil am ersten Hülsenteil.

Die erfindungsgemässe Einrichtung kann im Weiteren auch die Abdichtung des Durchlasses durch die Wand bzw. Decke um die Brandschutzhülse herum umfassen.

Die Erfindung betrifft nun auch ein Verfahren zur Erstellung einer Einrichtung mit Brandschutz zur Durchführung von mindestens einer in einem Installationsrohr geführten Leitung durch eine Wand oder Decke wie oben beschrieben.

Das Verfahren zeichnet sich durch folgende Schritte aus:
- Vorbereiten eines offenen Zwischenabschnittes im Bereich des Durchlasses in der Wand oder Decke zwischen einem zuführenden und wegführenden Installationsrohr;
- Anordnen der Brandschutzhülse im offenen Zwischenabschnitt und Durchführen der mindestens einen Leitung durch die Brandschutzhülse sowie
- Verbinden der Brandschutzhülse mit den jeweiligen Rohrendabschnitten des zuführenden und wegführenden Installationsrohrs.

Der Durchlass kann nachfolgend um die im Durchlass plazierte Brandschutzhülse herum verschlossen werden.

Der offene Zwischenabschnitt ist zweckmässig zwischen den Rohrenden, insbesondere den freien Rohrenden, des zuführenden und wegführenden Installationsrohrs angeordnet.

Das Vorbereiten des offenen Zwischenabschnitts kann das Auftrennen des Installationsrohres im Bereich des Durchlasses in ein zuführendes und wegführendes Installationsrohr beinhalten.

Der offene Zwischenabschnittes wird dabei zwischen den Enden des aufgeschnittenen Installationsrohres erstellt.

Der offene Zwischenabschnitt kann beispielsweise durch Herausschneiden eines Rohrzwischenstückes unter Ausbildung von zwei freien Rohrenden erstellt werden.

Der offene Zwischenabschnitt kann auch durch Auseinanderschieben der freien Rohrenden der Rohrteile des vollständig aufgetrennten Installationsrohres ausgebildet werden.

Das Installationsrohr muss jedoch nicht zwingend vollständig in zwei Rohrteile aufgetrennt werden. Eine teilweise Auftrennung des Installationsrohres, bei welcher ein durchgängiger Rohrteilquerschnitt erhalten bleibt, ist ebenfalls denkbar. Allerdings sollte gemäss dieser Ausführung ein Rohrteilquerschnitt im offenen Zwischenabschnitt zwischen den Rohrenden zwecks Freilegen eines Zuganges zu der mindestens einen Leitung herausgetrennt werden.

Es ist ferner auch möglich, dass zwei separate Installationsrohre mit ihren freien Rohrenden an beiden Seiten des Wand- bzw. Deckendurchgangs angeordnet werden.

Bei Einsatz einer mehrteiligen Brandschutzhülse erfolgen insbesondere folgende weiteren Schritte:
- Anordnen des ersten Hülsenteils der Brandschutzhülse im offenen Zwischenabschnitt und
- Verbinden des ersten Hülsenteils mit den jeweiligen Rohrendabschnitten des zuführenden und wegführenden Installationsrohrs sowie
- Einlegen der mindestens einen Leitung in den ersten Hülsenteil;
- Schliessen der Brandschutzhülse mit dem zweiten Hülsenteil.

Die mindestens eine Leitung führt dabei vom zuführenden zum wegführenden Installationsrohr durch die Brandschutzhülse bzw. durch den ersten Hülsenteil.

Es werden erfindungsgemäss die Hülsenendabschnitte bzw. die Endabschnitte des ersten Hülsenteils mit den jeweiligen Rohrendabschnitten des zuführenden und wegführenden Installationsrohrs verbunden.

Falls sich das intumeszente Material nicht bereits vor der Montage der Brandschutzhülse in einem der Hülsenteile befindet, so wird dieses spätestens vor dem Schliessen der Brandschutzhülse mit dem zweiten Hülsenteil in eines der Hülsenteile, insbesondere in das erste Hülsenteil eingebracht bzw. eingelegt.

Das intumeszente Material kann insbesondere bereits vor der Verbindung des ersten Hülsenteils mit den Rohrendabschnitten oder unmittelbar danach in das erste Hülsenteil eingelegt werden.

Die Verbindung des Rohrendabschnittes mit dem Endabschnitt des ersten Hülsenteils kann wie weiter oben bereits beschrieben über das Aufspreizen der Hülsenwände des ersten Hülsenteils und Einführen des Rohrendabschnittes durch die Längsöffnung quer zur Hülsenlängsrichtung erfolgen.

Die Brandschutzhülse wird nun durch Befestigen des zweiten Hülsenteils am ersten Hülsenteil geschlossen. Das zweite Hülsenteil kann über eine Formschlussverbindung, wie Clip-, Schnapp- oder Rastverbindung am ersten Hülsenteil befestigt werden.

So können am Innenumfang des zweiten Hülsenteil abstehende Finger angeordnet sein, welche zusammen mit einem Wandendabschnitt des zweiten Hülsenteils einen Aufnahmeraum zur Aufnahme eines Wandendabschnittes des ersten Hülsenteils ausbilden. Die abstehenden Finger können in Fortsetzung der Rillung ausgebildet sein und beispielsweise dieselben Abmessungen und Abstände zueinander wie die Rippen der Rillung aufweisen.

Nach dem Schliessen der Brandschutzhülse kann der Durchlass um die Brandschutzhülse in der Wand oder Decke vollständig geschlossen werden..

Mit dem Verschliessen des Wand- bzw. Deckendurchlasses um die Brandschutzhülse ist die Brandschutzabschottung fertig erstellt. Diese kann z. B. ein Weichschott oder Hartschott sein.

Die beidseitig vom Durchlass in der Wand bzw. Decke wegführenden Installationsrohre sowie die Aussenseiten der Wand bzw. Decke im Bereich des Durchlasses können überdies noch mit einem Brandschutzanstrich versehen werden.

Im Brandfall wird nun das intumeszente Material in der Brandschutzhülse durch die einwirkende Hitze aktiviert und beginnt sich auszudehnen. Dadurch wird der Durchführquerschnitt in der Brandschutzhülse vollständig verschlossen, so dass ein Durchtritt der Flammen und gegebenenfalls auch von Rauch und Verbrennungsgasen von der einen Wand- bzw. Deckenseite zur anderen Wand- bzw. Deckenseite durch die Brandschutzhülse verunmöglicht wird.

Die mindestens eine im Installationsrohr geführte Leitung kann eine Datenleitung oder eine Stromleitung sein. Datenleitungen können z. B. als Lichtwellenleiter oder Kupferleiter ausgelegt sein. Die genannte Leitung liegt insbesondere als Kabel vor.

Die vorliegende Einrichtung ist insbesondere für die Verlegung von Lichtwellenleitungen innerhalb von Gebäuden geeignet. Die Erfindung wurde speziell für so genannte "Fibre To The Desk/Office (FTTD/O) Lösungen konzipiert (auf deutsch: Glasfaser bis zum Schreibtisch bzw. zum Arbeitsraum). Dabei wird die Verkabelung eines Gebäudes vom Gebäudeverteiler bis zu den Netzwerkdosen oder einem Raumverteiler in den einzelnen Büros bzw. Arbeitsräumen mit Lichtwellenleitern ausgeführt. Die Lichtwellenleiter sind insbesondere Glasfaserleiter.

Bei derartigen Verkabelungen ist es üblich, Lichtwellenleiterkabel in Leitungsröhrchen zu führen. Die Leitungsröhrchen sind wiederum in einem Installationsrohr angeordnet. Solche Verkabelungen werden auch Bündelrohrsysteme genannt.

Je nach Umfang der Verkabelung enthält ein Installationsrohr eine Mehrzahl solcher Leitungsröhrchen, welche jeweils auf den entsprechenden Stockwerken des Gebäudes vom Installationsrohr abgezweigt und zu den einzelnen Netzwerkdosen geführt werden.

Ein Leitungsröhrchen nimmt dabei jeweils ein Lichtwellenleiterkabel auf. Das Lichtwellenleiterkabel kann wiederum einen oder mehrere Lichtwellenleiter, wie Glasfasern, enthalten.

In der Regel werden die Installationsrohre zusammen mit den in diesen geführten leeren Leitungsröhrchen als Bündelrohre verlegt. Die Lichtwellenleiterkabel werden erst in einem anschliessenden Schritt, d.h. nach dem Verlegen der Installationsleitungen, in die Leitungsröhrchen eingeführt.

Das Einführen der Lichtwellenleiterkabel in die Leitungsröhrchen geschieht insbesondere mittels Einblastechnologie. Bei dieser Technologie werden die Lichtwellenleiterkabel insbesondere mit Druckluft in die Leitungsröhrchen eingeblasen. Die Leitungsröhrchen werden deshalb auch Einblasröhrchen bezeichnet.

Bei Bündelrohrsystemen ist es wichtig, dass die Leitungsröhrchen möglichst nicht gequetscht werden, insbesondere auch nicht im Bereich von Brandschutzabschottungen, da sonst das Einführen, insbesondere das Einblasen der Lichtwellenleiterkabel behindert oder verunmöglicht wird.

Die vorliegende erfindungsgemässe Erfindung weist nun den Vorteil auf, dass die zusätzlichen Brandschutzvorkehrung mit der Brandschutzhülse einfach in der Montage ist und vom Leitungsinstallateur gleichzeitig mit dem Verlegen der Installationsrohre selbst vorgenommen werden kann. Eine aufwendige Koordination zwischen den Handwerkern und bauverantwortlichen Personen zwecks vorschriftsgemässer Erstellung der Brandschutzabschottung ist, wie sonst üblich, nicht mehr notwendig.

Die erfindungsgemässe Einrichtung lässt sich nämlich mit einer herkömmlichen Brandschutzabschottung kombinieren, wie sie beispielsweise auch bei einfachen Kabeldurchführung zum Einsatz kommt.

Im Weiteren weist die erfindungsgemässe Brandschutzeinrichtung den Vorteil auf, dass der Rohrquerschnitt im Brandfall im Wand- bzw. Deckendurchlass, d.h. in der Wand bzw. Decke selbst und nicht ausserhalb des Durchlasses durch das sich ausdehnende intumeszente Material verschlossen wird.

Dies führt zu einem effektiveren Brandschutz als beispielsweise bei Brandschutzinstallationen, bei welchen der Rohrquerschnitt im Brandfall vor dem Durchlass, also nicht innerhalb des Durchlasses in der Decke oder in der Wand, durch ein sich ausdehnendes intumeszentes Material verschlossen wird.

Im Folgenden wird der Erfindungsgegenstand anhand eines Ausführungsbeispiels, welches in den beiliegenden Figuren dargestellt ist, näher erläutert. Es zeigen jeweils schematisch:
- Figur 1a: eine perspektivische Ansicht eines Installationsrohres mit einer Mehrzahl von Leitungsröhrchen;
- Figur 1b: eine Detailansicht des Installationsrohres nach Figur 1a;
- Figur 1c: eine Seitenansicht eines Installationsrohres nach Figur 1a und 1b mit einer Biegung;
- Figur 1d: eine Querschnittsansicht des Installationsrohres nach Figur 1a bis 1c;
- Figur 2a: eine perspektivische Ansicht eines für eine erfindungsgemässe Einrichtung vorbereiteten Installationsrohres mit einer Mehrzahl von Leitungsröhrchen;
- Figur 2b: eine perspektivische Ansicht eines für eine erfindungsgemässe Einrichtung vorbereiteten Installationsrohres nach Figur 2a mit einem montierten ersten Hülsenteil;
- Figur 2c: eine perspektivische Ansicht eines für eine erfindungsgemässe Einrichtung vorbereiteten Installationsrohres nach Figur 2a und 2b mit einer komplett montierten Brandschutzhülse;
- Figur 3: eine perspektivische Ansicht einer Brandschutzhülse vor der Montage;
- Figur 4a: eine Querschnittsansicht einer montierten Brandschutzhülse vor einem Brandfall;
- Figur 4b: eine Querschnittsansicht einer montierten Brandschutzhülse nach einem Brandfall;
- Figur 5: eine perspektivische Ansicht einer teilweise erstellten erfindungsgemässen Brandschutzabschottung in einem Wanddurchlass;
- Figur 6: eine perspektivische Ansicht der fertig erstellten Brandschutzabschottung im Wanddurchlass nach Figur 5.

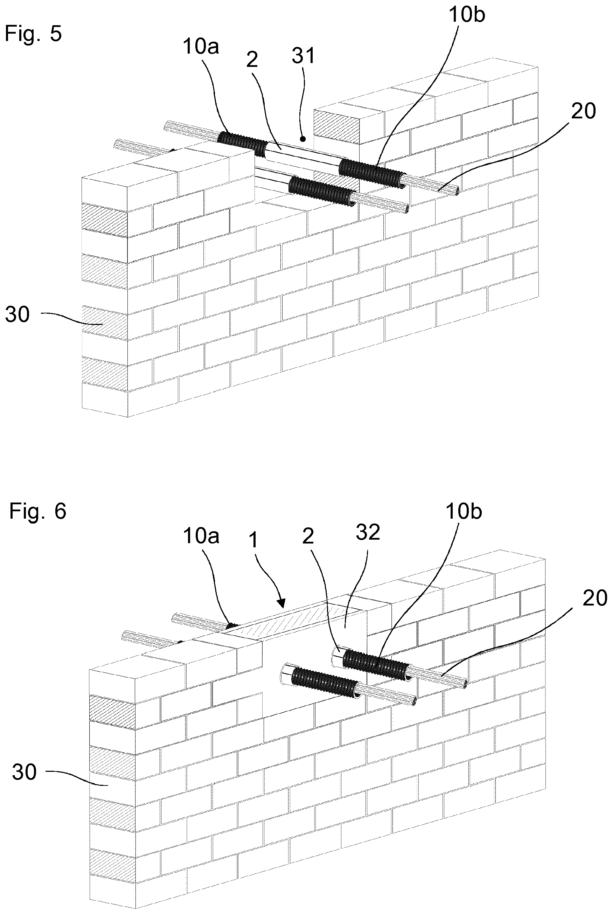

Die erfindungsgemässe Einrichtung 1 mit Brandschutz gemäss Figur 6 umfasst eine Brandschutzdurchführung für Lichtwellenleiterkabel 21 durch eine gemauerte Wand 30. Die Wand 30 weist hierzu einen Durchlass 31 zur Durchführung der Lichtwellenleiterkabel 21 durch die Wand 31 (siehe auch Figur 5).

Die Lichtwellenleiterkabel 21, welche z. B. einen Durchmesser von 2 mm aufweisen, werden ausserhalb der Brandschutzdurchführung in einem Installationsrohr 10 geführt. Das Installationsrohr 10 ist als Wellrohr ausgebildet, welches z. B. einen Durchmesser von 35 mm aufweist und an seinem Aussenumfang eine Rillung 11 mit in Längsrichtung L abwechselnd angeordneten, ringförmig umlaufenden Rillen 11a, und Rippen 11b enthält (siehe Figur la-ld).

Im Wellrohr 10 sind Leitungsröhrchen 20 geführt, welche z. B. einen Durchmesser von 4 bis 5 mm aufweisen und jeweils ein Lichtwellenleiterkabel 21 aufnehmen. Die Lichtwellenleiterkabel 21 werden jeweils in ein Leitungsröhrchen 20, auch Einblasröhrchen bezeichnet, eingeblasen.

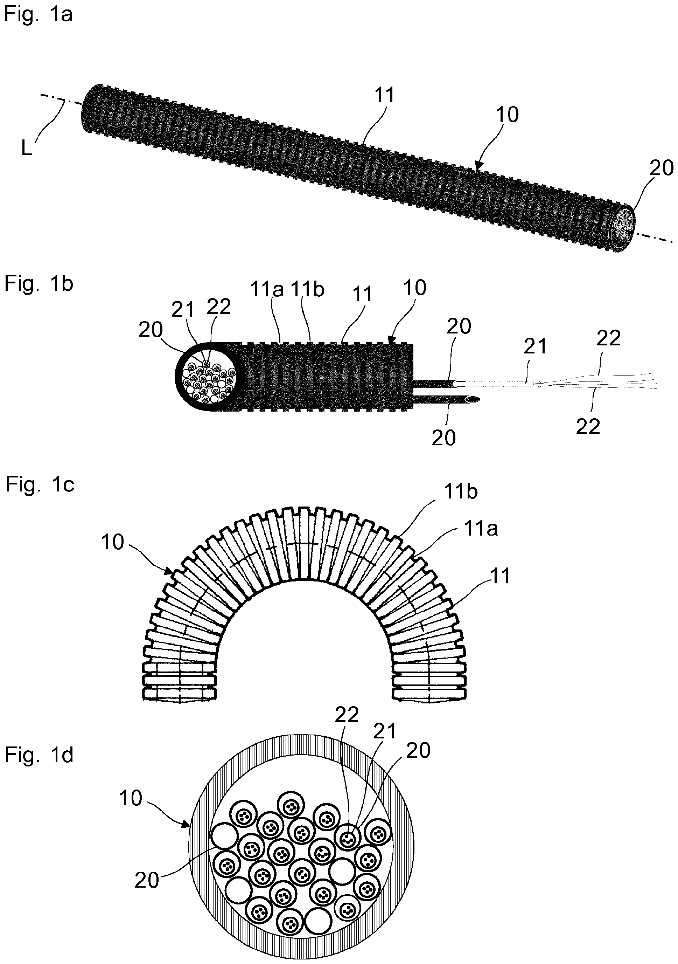

Jedes Lichtwellenleiterkabel 21 umfasst vier Lichtwellenleiter 22. Die Lichtwellenleiter 22 können z. B. Glasfasern sein (siehe Figur 1b). Selbstverständlich können im Wellrohr 10 auch andersartig aufgebaute Leitungskabel bzw. Lichtwellenleiterkabel untergebracht sein.

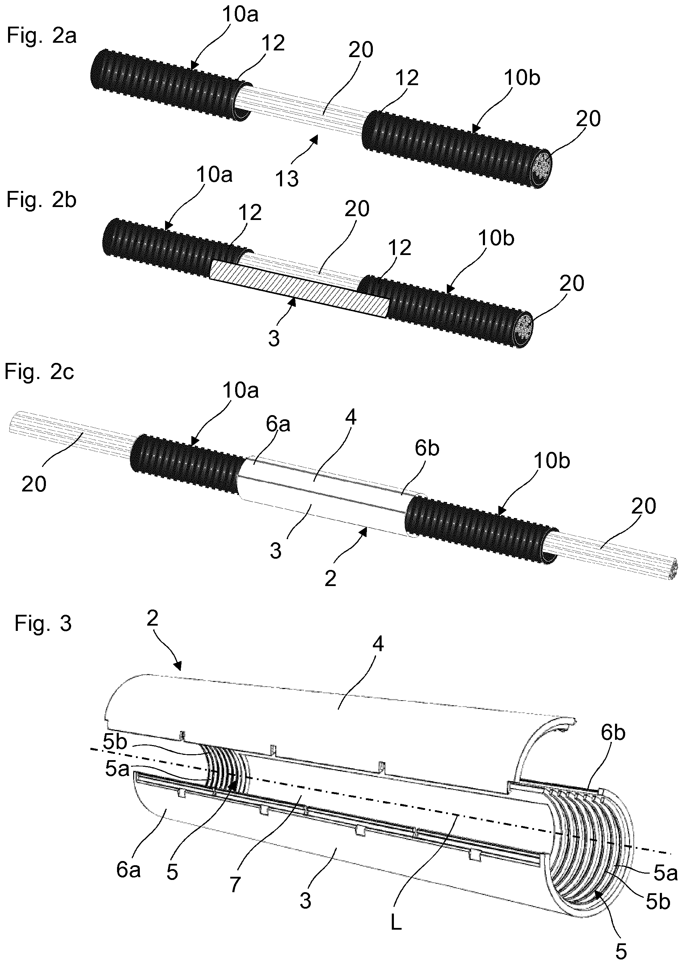

Zur Erstellung des erfindungsgemässen Brandschutzdurchganges wird nun das Wellrohr 10 im Bereich des Durchlasses 31 in der Wand 30 quer zur Rohrlängsrichtung L in eine zuführendes Wellrohr 10a und in ein wegführendes Wellrohr 10b getrennt. Ferner wird zwischen den Stirnendseiten des zuführenden und wegführenden Wellrohrs 10a, 10b ein offener Zwischenabschnitt 13 ausgebildet (siehe Figur 2a). Dies kann durch Herausschneiden eines Rohrzwischenstückes oder durch Auseinanderschieben der beiden Rohrenden geschehen.

Im offenen Zwischenabschnitt 13 sind die Leitungsröhrchen 20, gegebenenfalls mit den Lichtwellenleiterkabeln 21, zwischen dem zuführenden und wegführenden Wellrohrs 10a, 10b offen geführt.

Der offene Zwischenabschnitt 13 wird in einem nachfolgenden Schritt mit einer Brandschutzhülse 2 verschlossen.

Die Brandschutzhülse 2 setzt sich aus einem ersten und zweiten Hülsenteil 3, 4 zusammen. Die beiden Hülsenteile 3, 4 sind separat ausgebildet. Der erste Hülsenteil 3 bildet eine zwischen den beiden Stirnendseiten durchgängige Längsöffnung 7 aus. Der zweite Hülsenteil 4 ist als Abdeckung ausgebildet, mittels welcher die Längsöffnung 7 unter Ausbildung der Brandschutzhülse 2 verschlossen wird (siehe Figur 3). In einem ersten Montageschritt wird nun der erste Hülsenteil 3 mit dem zuführenden und wegführenden Wellrohr 10a, 10b verbunden. Das Hülsenteil 3 bzw. die Brandschutzhülse 2 überbrückt dabei den offenen Zwischenabschnitt 13 zwischen dem zuführenden und wegführenden Wellrohr 10a, 10b. Der Hülsenteil 3 bzw. die Brandschutzhülse 2 wird entsprechend im Bereich des Durchlasses 31 angeordnet (siehe Figur 5).

Hierzu weisen die beiden Hülsenendabschnitte 6a, 6b der Brandschutzhülse 2 an ihrem Innenumfang eine Rillung 5 mit in Längsrichtung L abwechselnd angeordneten Rillen 5a, und Rippen 5b auf. Die Rillung 5 ist gegengleich zur Rillung 11 am Wellrohr 10 ausgebildet.

Der erste Hülsenteil 3 wird nun über dessen Endabschnitte mit den Rohrendabschnitten 12 des zuführenden und wegführenden Wellrohres 10 verbunden. Die Endabschnitte des ersten Hülsenteils 3, welche Teil der Hülsenendabschnitte 6a, 6b bilden, umgreifen dabei jeweils die Rohrendabschnitte 12 des zuführenden und wegführenden Wellrohrs 10 aussenseitig.

Die Wellrohre 10a, 10b sind in den Endabschnitten des ersten Hülsenteils 3 und folglich in den Hülsenendabschnitten 6a, 6b der zusammengefügten Brandschutzhülse 2 axial gesichert.

Hierzu ist der Innendurchmesser der Hülsenendabschnitte 6a, 6b der montierten Brandschutzhülse 2 derart auf den Aussendurchmesser des Wellrohres 10 abgestimmt, dass die Hülsenendabschnitt 6a, 6b die Rohrendabschnitte 12 passgenau umfassen. Dabei greifen die beiden Rillungen 5, 11 von Wellrohr 10 und Hülsenendabschnitte 6a, 6b kämmend ineinander. Die Hülsenendabschnitte 6a, 6b halten dabei die Rohrendabschnitte 12 klemmend.

Allerdings kann aufgrund der oben genannten passgenauen Ausgestaltung des Aussenumfanges der Rohrendabschnitte 12 und des Innenumfanges der Hülsenendabschnitte 6a, 6b das Wellrohr 10a, 10b auch nicht über die offenen Stirnendseiten in die Brandschutzhülse 2 eingeschoben werden. Die Rohrendabschnitte 12 müssen vielmehr durch die Längsöffnung 7 quer zur Längsrichtung L der Brandschutzhülse 2 eingeschoben werden.

Die Breite der Längsöffnung 7 ist nun kleiner als der grösste Durchmesser des Wellrohrs 10a, 10b bzw. der Rohrendabschnitte, so dass zum Einführen der Rohrendabschnitte 12 in die Endabschnitte des ersten Hülsenteils 3 die Hülsenwände unter Vergrösserung der Längsöffnung 7 auseinander gespreizt werden müssen.

Nach der Einführung der Rohrendabschnitte 12 in die Endabschnitte des ersten Hülsenteils 3 nimmt die Längsöffnung 7 unter Rückverformung der Hülsenwände wieder ihre ursprüngliche Breite ein. Auf diese Weise werden die Rohrendabschnitte 12 auch quer zur Längsrichtung L, d.h. in Axialrichtung, gegen ein Herausgleiten gesichert.

Die oben beschriebene Ausführung weist den Vorteil auf, dass die Rohrendabschnitte 12 bereits vor dem Schliessen der Längsöffnung 7 mit dem zweiten Hülsenteil 4 sowohl gegen ein Herausgleiten in axialer Richtung als auch quer zur Axialrichtung L gesichert ist. Dies erleichtert die Hülsenmontage erheblich, da bereits vor der Montage des zweiten Hülsenteils 4 ein Herausgleiten der Rohrendabschnitte 12 aus dem ersten Hülsenteil 3 nicht mehr möglich ist.

In einem weiteren Schritt kann nun die Brandschutzhülse 2 durch Befestigen des zweiten Hülsenteils 4 unter Abdeckung der Längsöffnung 7 am ersten Hülsenteil 3 fertig montiert werden. Der zweite Hülsenteil 4 wird insbesondere über eine Formschlussverbindung, wie Clip- oder Rastverbindung, am ersten Hülsenteil 3 befestigt. Die Brandschutzhülse 2 weist nun einen geschlossenen Aussenumfang aus. Die Brandschutzhülse 2 dient dazu, ein intumeszentes Material aufzunehmen. Sofern das intumeszente Material nicht bereits vor der Montage der Brandschutzhülse 2 in bzw. an einem der beiden Hülsenteile 3, 4 angeordnet bzw. angebracht wurde, muss dieses vor dem Schliessen der Brandschutzhülse mit dem zweiten Hülsenteil 4 in den Innenraum der Brandschutzhülse 2 eingebracht werden.

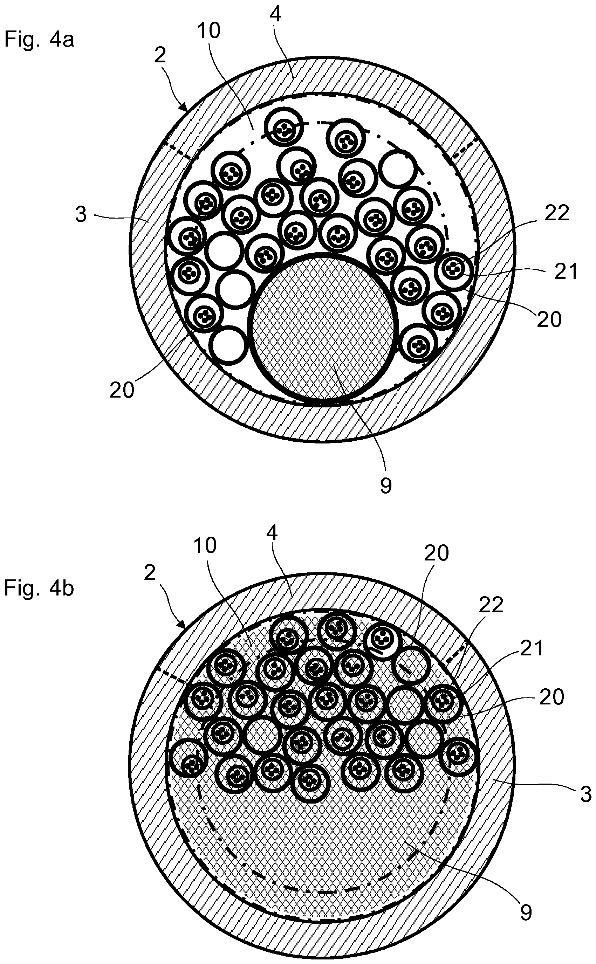

Das intumeszente Material liegt in vorliegendem Ausführungsbeispiel als Abschnitt eines vorgefertigten, handelsüblichen, intumeszenten Dehnfugenbandes 9 vor (siehe Figur 4a). Das Dehnfugenband 9 weist hier einen rundlichen Querschnitt auf.

Nach Abschluss der Montage der Brandschutzhülse 2 wird der Durchlass 31 in der Wand 30 um die Brandschutzhülse 2 herum unter Ausbildung eines so genannten Weichschotts geschlossen. Hierzu werden Brandschutzplatten 32 eingesetzt.

Im Brandfall expandiert nun das intumeszente Dehnfugenband 9 in der Brandschutzhülse 2, wodurch der Durchführquerschnitt in der Brandschutzhülse 2 verschlossen wird (siehe Figur 4b). Ein Durchtritt der Flammen ist nicht mehr möglich. Ferner wird auch der Durchtritt von Rauch und Brandgasen verhindert oder zumindest erheblich reduziert.

## Patentansprüche

1. Einrichtung (1) mit Brandschutz, umfassend die Durchführung von mindestens einer in einem Installationsrohr (10) geführten Leitung (21) durch einen Durchlass (31) in einer Wand (30) oder Decke, wobei im Bereich des Durchlasses (31) eine mehrteilige Brandschutzhülse (2), enthaltend einen ersten und zweiten Hülsenteil (3, 4) angeordnet ist, wobei der erste Hülsenteil (3) eine zwischen zwei Stirnendseiten durchgängige Längsöffnung (7) ausbildet, welche vom zweiten Hülsenteil (4) verschlossen ist, und im Inneren der Brandschutzhülse (2) ein intumeszentes Material (9) angeordnet ist,
**dadurch gekennzeichnet, dass**
im Bereich des Durchlasses (31) zwischen einem zuführenden und wegführenden Installationsrohr ein offener Zwischenabschnitt (13) ausgebildet wird, wobei die Brandschutzhülse (2) im offenen Zwischenabschnitt (13) angeordnet ist und diesen verschliesst, und die Brandschutzhülse (2) mit einem ersten Hülsenendabschnitt (6a) mit dem Rohrendabschnitt (12) eines als Wellrohr ausgebildeten, zuführenden Installationsrohrs (10a) und mit einem zweiten Hülsenendabschnitt (6b) mit dem Rohrendabschnitt (12) eines als Wellrohr ausgebildeten, wegführenden Installationsrohrs (10b) verbunden ist, wobei die Brandschutzhülse (2) in den Hülsenendabschnitten (6a, 6b) eine Rillung (5) zur Ausbildung einer in Hülsenlängsrichtung (L) gesicherten Verbindung mit den Rohrendabschnitten (12) der Installationsrohre (10a, 10b) enthält, und die mindestens eine Leitung (21) vom zuführenden Installationsrohr (10a) durch die Brandschutzhülse (2) in das wegführende Installationsrohr (10b) geführt ist.

2. Einrichtung nach Anspruch 1, **dadurch gekennzeichnet, dass** das intumeszente Material (9) bei der Erstellung der Einrichtung (1) als vorgefertigter Festkörper vorliegt.

3. Einrichtung nach Anspruch 1 oder 2, **dadurch gekennzeichnet, dass** das intumeszente Material (9) ein schaumstoffartiger Körper mit intumeszenten Eigenschaften ist.

4. Einrichtung nach einem der Ansprüche 1 bis 3, **dadurch gekennzeichnet, dass** die Rillung (5) am Innenumfang der Hülsenendabschnitte (6a, 6b) angeordnet ist.

5. Einrichtung nach einem der Ansprüche 1 bis 4, **dadurch gekennzeichnet, dass** die Brandschutzhülse (2) mit mindestens einem Hülsenendabschnitt (6a, 6b) den Rohrendabschnitt (12) eines Installationsrohres (10a, 10b) übergreift.

6. Einrichtung nach einem der Ansprüche 1 bis 5, **dadurch gekennzeichnet, dass** der Durchlass (31) in der Wand (30) oder Decke um die Brandschutzhülse (2) herum abgedichtet ist.

7. Brandschutzhülse (2) für eine Einrichtung nach einem der Ansprüche 1 bis 6, welche mehrteilig ausgebildet ist und einen ersten Hülsenteil (3) mit einer in Hülsenlängsrichtung (L) durchgängigen Längsöffnung (7) sowie einen zweiten Hülsenteil (4) zum Abdecken der Längsöffnung (7) enthält und der erste und zweiten Hülsenteil (3, 4) relativ zueinander beweglich sind,
**dadurch gekennzeichnet, dass**
die Brandschutzhülse (2) in mindestens einem Hülsenendabschnitt (6a, 6b) eine Rillung (5) zur Ausbildung einer in Hülsenlängsrichtung (L) gesicherten Verbindung mit dem Rohrendabschnitt (12) eines als Wellrohr ausgebildeten Installationsrohres (10a, 10b) enthält.

8. Brandschutzhülse nach Anspruch 7, **dadurch gekennzeichnet, dass** die Rillung (5) im Hülsenendabschnitt (6a, 6b) so ausgelegt ist, dass diese kämmend in die Rillung am Rohrendabschnitt (12) des Wellrohrs (10a, 10b) eingreift.

9. Brandschutzhülse nach Anspruch 7 oder 8, **dadurch gekennzeichnet, dass** der erste und zweite Hülsenteil (3, 4) als separate Hülseneinzelteile ausgebildet sind, welche zur Brandschutzhülse (2) zusammenfügbar sind.

10. Brandschutzhülse nach einem der Ansprüche 7 bis 9, **dadurch gekennzeichnet, dass** im Inneren der Brandschutzhülse (2) ein intumeszentes Material (9) angeordnet ist.

11. Brandschutzhülse nach einem der Ansprüche 7 bis 10, **dadurch gekennzeichnet, dass** die Hülsenteile (3, 4) einen kreisbogenförmigen Querschnitt aufweisen.

12. Brandschutzhülse nach einem der Ansprüche 7 bis 11, **dadurch gekennzeichnet, dass** die Breite der Längsöffnung (7) im ersten Hülsenteil (3) im Bereich der Hülsenendabschnitte (6a, 6b) kleiner ist als der grösste Aussendurchmesser des Installationsrohres (10a, 10b) am Rohrendabschnitt (12).

13. Verfahren zur Erstellung einer Einrichtung (1) mit Brandschutz zur Durchführung von mindestens einer in einem Installationsrohr (10) geführten Leitung (21) durch einen Durchlass (31) in einer Wand (30) oder Decke nach einem der Ansprüche 1 bis 6, wobei im Durchlass (31) eine Brandschutzhülse (2) plaziert wird,
**gekennzeichnet durch** folgende Schritte:
- Vorbereiten eines offenen Zwischenabschnittes (13) im Bereich des Durchlasses (31) zwischen einem zuführenden und wegführenden Installationsrohr (10a, 10b);
- Anordnen der Brandschutzhülse (2) im offenen Zwischenabschnitt (13) und Durchführen der mindestens einen Leitung (21) durch die Brandschutzhülse (2) sowie
- Verbinden der Brandschutzhülse (2) mit den jeweiligen Rohrendabschnitten (12) des zuführendes und wegführendes Installationsrohrs (10a, 10b).

14. Verfahren nach Anspruch 13, **gekennzeichnet durch** die Schritte:
- Anordnen eines ersten Hülsenteils (3) der Brandschutzhülse (2) im offenen Zwischenabschnitt (13) und
- Verbinden des ersten Hülsenteils (3) mit den jeweiligen Rohrendabschnitten (12) des zuführenden und wegführenden Installationsrohrs (10a, 10b) sowie
- Einlegen der mindestens einen Leitung (21) in den ersten Hülsenteil (3);
- Schliessen der Brandschutzhülse (2) mit einem zweiten Hülsenteil (4).

15. Verfahren nach Anspruch 13 oder 14, **gekennzeichnet durch** die Schritte:
- Verschliessen des Durchlasses (31) um die im Durchlass (31) plazierte Brandschutzhülse (2).

## Claims

1. An installation (1) with a fire protection, comprising the feed-through of at least one conduit (21) which is led in an installation pipe (10), through an opening (31) in a wall (30) or ceiling, wherein a multi-part fire-protection sleeve (2) comprising a first and a second sleeve part (3, 4) is arranged in the region of the opening (31), wherein the first sleeve part (3) forms a longitudinal opening (7) which is continuous between two face end sides and which is closed by the second sleeve part (4), and an intumescent material (9) is arranged in the inside of the fire-protection sleeve (2),
**characterised in that**
an open intermediate section (13) is formed in the region of the opening (31) between an incoming and outgoing installation pipe, wherein the fire-protection sleeve (2) is arranged in the open intermediate section (13) and closes this, and the fire-protection sleeve (2) with a first sleeve end section (6a) is connected to the pipe end section (12) of an incoming installation pipe (10a) designed as a corrugated pipe and with a second sleeve end section (6b) is connected to the pipe end section (12) of an outgoing installation pipe (10b) designed as a corrugated pipe, wherein the fire-protection sleeve (2) in the sleeve end sections (6a, 6b) comprises a fluting (5) for forming a connection to the pipe end sections (12) of the installation pipes (10a, 10b), said connection being secured in the sleeve longitudinal direction (L), and the at least one conduit (21) is led from the incoming installation pipe (10a) through the fire-protection sleeve (2) into the outgoing installation pipe (10b).

2. An installation according to claim 1, **characterised in that** the intumescent material (9) is present as a premanufactured solid body on setting up the installation (1).

3. An installation according to claim 1 or 2, **characterised in that** the intumescent material (9) is foam-like body with intumescent characteristics.

4. An installation according to one of the claims 1 to 3, **characterised in that** the fluting (5) is arranged on the inner periphery of the sleeve end sections (6a, 6b).

5. An installation according to one of the claims 1 to 4, **characterised in that** fire-protection sleeve (2) with at least one sleeve end section (6a, 6b) engages over the pipe end section (12) of an installation pipe (10a, 10b).

6. An installation according to one of the claims 1 to 5, **characterised in that** the opening (31) in the wall (30) or ceiling is sealed off around the fire-protection sleeve (2).

7. A fire-protection sleeve (2) for an installation according to one of the claims 1 to 6, which is designed in a multi-part manner and comprises a first sleeve part (3) with a longitudinal opening (7) which is continuous in the sleeve longitudinal direction (L) as well as a second sleeve part (4) for covering the longitudinal opening (7), and the first and second sleeve part (3, 4) are movable relative to one another,
**characterised in that**
the fire-protection sleeve (2) in at least one sleeve end section (6a, 6b) comprise a fluting (5) for forming a connection to the pipe end section (12) of an installation pipe (10a, 10b) designed as a corrugated pipe, said connection being secured in the sleeve longitudinal direction (L).

8. A fire-protection sleeve according to claim 7, **characterised in that** the fluting (5) in the sleeve end section (6a, 6b) is designed in a manner such that this meshingly engages into the fluting on the pipe end section (12) of the corrugated pipe (10a, 10b).

9. A fire-protection sleeve according to claim 7 or 8, **characterised in that** the first and the second sleeve part (3, 4) are designed as separate sleeve individual parts which can be joined together into the fire-protection sleeve (2).

10. A fire-protection sleeve according to one of the claims 7 to 9, **characterised in that** an intumescent material (9) is arranged in the inside of the fire-protection sleeve (2).

11. A fire-protection sleeve according to one of the claims 7 to 10, **characterised in that** the sleeve parts (3,4) have an arc-shaped cross section.

12. A fire-protection sleeve according to one of the claims 7 to 11, **characterised in that** the width of the longitudinal opening (7) in the first sleeve part (3) in the region of the sleeve end sections (6a, 6b) is smaller than the largest outer diameter of the installation pipe (10a, 10b) on the pipe end section (12).

13. A method for setting up an installation (1) with a fire protection for leading at least one conduit (21) which is led in an installation pipe (10), through an opening (31) in a wall (30) or ceiling, according to one of the claims 1 to 6, wherein a fire-protection sleeve (2) is placed in the opening (31),
**characterised by** the following steps:
- preparing an open intermediate section (13) in the region of the opening (31) between an incoming and an outgoing installation pipe (10a, 10b);
- arranging the fire-protection sleeve (2) in the open intermediate section (13) and leading the at least one conduit (21) through the fire-protection sleeve (2) as well as
- connecting the fire-protection sleeve (2) to the respective pipe end sections (12) of the incoming and outgoing installation pipe (10a 10b).

14. A method according to claim 13, **characterised by** the steps:
- arranging a first sleeve part (3) of the fire-protection sleeve (2) in the open intermediate section (13),
- connecting the first sleeve part (3) to the respective pipe end sections (12) of the incoming and outgoing installation pipe (10a, 10b) as well as
- inserting the at least one conduit (21) into the first sleeve part (3);
- closing the fire-protection sleeve (2) with a second sleeve part (4).

15. A method according to claim 13 or 14, **characterised by** the steps:
- closing the opening (31) around the fire-protection sleeve (2) which is placed in the opening (31).

## Revendications

1. Dispositif (1) doté d'une protection contre le feu, comprenant
le passage d'au moins un conducteur (21) guidé dans un tube d'installation (10) dans un passage (31) ménagé dans une paroi (30) ou un plafond,
un manchon (2) de protection contre le feu, en plusieurs pièces, contenant une première et une deuxième partie de manchon (3, 4) étant disposé au niveau du passage (31), la première partie (3) du manchon formant entre deux côtés d'extrémité frontale une ouverture longitudinale (7) continue qui est fermée par la deuxième partie (4) du manchon,
un matériau intumescent (9) étant disposé à l'intérieur du manchon (2) de protection contre le feu, **caractérisé en ce que**
au niveau du passage (31), une section intermédiaire ouverte (13) est formée entre un tube d'installation entrant et un tube d'installation sortant,
**en ce que** le manchon (2) de protection contre le feu est disposé dans la section intermédiaire ouverte (13) et ferme cette dernière,
**en ce que** le manchon (2) de protection contre le feu est relié par une première section d'extrémité (6a) du manchon à la section d'extrémité (12) d'un tube d'installation (10a) entrant configuré comme tube ondulé et par une deuxième section d'extrémité (6b) du manchon à la section d'extrémité (12) d'un tube d'installation (10b) sortant configuré comme tube ondulé,
**en ce que** le manchon (2) de protection contre le feu contient dans les sections d'extrémité (6a, 6b) du manchon une nervuration (5) qui forme une liaison, protégée dans le sens de la longueur (L) du manchon, avec les sections d'extrémité (12) des tubes d'installation (10a, 10b) et
**en ce que** le ou les conducteurs (21) sont guidés depuis le tube d'installation (10a) jusque dans le tube d'installation (10b) par le manchon (2) de protection contre le feu.

2. Dispositif selon la revendication 1, **caractérisé en ce que** lors du placement du dispositif (1), le matériau intumescent (9) se présente sous la forme d'un solide préfabriqué.

3. Dispositif selon les revendications 1 ou 2, **caractérisé en ce que** le matériau intumescent (9) est un corps de type mousse à propriétés intumescentes.

4. Dispositif selon l'une des revendications 1 à 3, **caractérisé en ce que** la nervuration (5) est disposée à la périphérie intérieure des sections d'extrémité (6a, 6b) du manchon.

5. Dispositif selon l'une des revendications 1 à 4, **caractérisé en ce que** le manchon (2) de protection contre le feu chevauche la section d'extrémité (12) d'un tube d'installation (10a, 10b) par au moins une section d'extrémité (6a, 6b) du manchon.

6. Dispositif selon l'une des revendications 1 à 5, **caractérisé en ce que** le passage (31) ménagé dans la paroi (30) ou le plafond est fermé hermétiquement autour du manchon (2) de protection contre le feu.

7. Manchon (2) de protection contre le feu pour un dispositif selon l'une des revendications 1 à 6, configuré en plusieurs pièces et contenant une première partie de manchon (3) une ouverture longitudinale (7) continue dans le sens de la longueur (L) du manchon ainsi qu'une deuxième partie de manchon (4) qui recouvre l'ouverture longitudinale (7), la première et la deuxième partie (3, 4) de manchon étant mobiles l'une par rapport à l'autre,
**caractérisé en ce que**
le manchon (2) de protection contre le feu contient dans au moins une sections d'extrémité (6a, 6b) du manchon une nervuration (5) permettant de former une liaison protégée dans le sens de la longueur (L) du manchon avec la section d'extrémité (12) d'un tube d'installation (10a, 10b) configuré comme tube ondulé.

8. Manchon de protection contre le feu selon la revendication 7, **caractérisé en ce que** la nervuration (5) prévue sur la section d'extrémité (6a, 6b) du manchon est conçue de telle sorte qu'elle s'engage en peigne dans la nervuration prévue sur la section d'extrémité (12) du tube ondulé (10a, 10b).

9. Manchon de protection contre le feu selon les revendications 7 ou 8, **caractérisé en ce que** la première et la deuxième partie (3, 4) de manchon sont configurées comme parties de manchon séparées qui peuvent être assemblées en un manchon (2) de protection contre le feu.

10. Manchon de protection contre le feu selon l'une des revendications 7 à 9, **caractérisé en ce qu'**un matériau intumescent (9) est disposé à l'intérieur du manchon (2) de protection contre le feu.

11. Manchon de protection contre le feu selon l'une des revendications 7 à 10, **caractérisé en ce que** la première et la deuxième partie (3, 4) de manchon présentent une section transversale en forme d'arc de cercle.

12. Manchon de protection contre le feu selon l'une des revendications 7 à 11, **caractérisé en ce que** la largeur de l'ouverture longitudinale (7) dans la première partie de manchon (3) au niveau des sections d'extrémité (6a, 6b) du manchon est plus petite que le plus grand diamètre extérieur du tube d'installation (10a, 10b) au niveau de la section d'extrémité (12).

13. Procédé de formation d'un dispositif (1) doté d'une protection contre le feu et servant à faire passer au moins un conducteur (21) guidé dans un tube d'installation (10) dans un passage (31) ménagé dans une paroi (30) ou un plafond selon l'une des revendications 1 à 6, un manchon (2) de protection contre le feu étant placé dans le passage (31),
le procédé étant **caractérisé par** les étapes suivantes :
- au niveau du passage (31), préparer une section intermédiaire ouverte (13) entre un tube d'installation entrant et un tube d'installation sortant (10a, 10b),
- placer le manchon (2) de protection contre le feu dans la section intermédiaire ouverte (13) et passer le ou les conducteurs (21) dans le manchon (2) de protection contre le feu et
- relier le manchon (2) de protection contre le feu avec les sections d'extrémité (12) du tube d'installation entrant et du tube d'installation sortant (10a, 10b).

14. Procédé selon la revendication 13, **caractérisé par** les étapes suivantes :
- placement d'une première partie (3) du manchon (2) de protection contre le feu dans la section intermédiaire ouverte (13),
- liaison de la première partie de manchon (3) avec les sections d'extrémité (12) du tube d'installation entrant et du tube d'installation sortant (10a, 10b),
- placement du ou des conducteurs (21) dans la première partie de manchon (3) et
- fermeture du manchon (2) de protection contre le feu par une deuxième partie de manchon (4).

15. Procédé selon les revendications 13 ou 14, **caractérisé par** l'étape qui consiste à :
- fermer le passage (31) autour du manchon (2) de protection contre le feu placé dans le passage (31).
